# EUROPEAN PATENT APPLICATION

(11) **EP 3 001 694 A1**
(43) Date of publication of application: **30.03.2016**
(21) Application number: 14186170.8
(22) Date of filing: 24.09.2014
(51) Int. Cl.: H04Q 1/14

(54) **Extension module for a telecommunications module**

(71) Applicant: 3M Innovative Properties Company, Saint Paul, MN 55133-3427 (US)
(72) Inventor: Seidel, Udo, 42781 Haan (DE); Fasce, Xavier, 74440 Verchaix (FR); Westkamp, Harald, 45527 Hattingen (DE)
(74) Representative: Müller, Bruno

(57) **Abstract**

Extension module (1) for a telecommunications module (10) having a first externally accessible wire contact (30) for securing a telecommunications signal wire thereto. The extension module comprises a) a contact engagement element (210), adapted to be mechanically engaged with, and electrically connected with, the wire contact of the telecommunications module, and b) a conductive wire connection element (220), adapted for conductively securing a telecommunications signal wire thereto, and electrically connected with the contact engagement element. The extension module further comprises engagement means (90) for engaging the extension module with the telecommunications module in such a manner, that, when engaged, at least a portion of the extension module can be moved into a closed position, in which the contact engagement element is in contact with the wire contact, and into an open position, in which the contact engagement element is not in contact with the wire contact.

## Description

The invention relates to telecommunications modules for connecting telecommunication wires with each other, and in particular to extension modules that can be engaged with such telecommunication modules. The invention also relates to combinations and assemblies of telecommunications modules with such extension modules, as well as methods of separating a telecommunications line and methods of upgrading telecommunications modules.

Certain telecommunications modules serve to connect telecommunications wires carrying outgoing signals with other telecommunications wires carrying incoming signals. Such telecommunications modules are sometimes called cross connect modules or cross connect strips. Mostly, incoming wires are connected to individual wire contacts on one side (the incoming side or distribution side) of the module, outgoing wires are connected to individual wire contacts on an opposed side (the outgoing side or equipment side) of the module, and contact elements inside the module connect each wire contact on the incoming side with a corresponding wire contact on the outgoing side of the module.

For testing and fault finding, telecommunications lines need to be interrupted in a specific location ("disconnection point"), such that test signals can be independently sent from the disconnection point into both directions of the line. This arrangement is called "look-both-ways" in certain contexts. In order to facilitate "look-both-ways" testing, certain so-called disconnection telecommunication modules contain contact elements that have a special shape, which allows for an electrical disconnection between one incoming wire contact and its corresponding outgoing wire contact by inserting a probe into the disconnection module. An example of such a module is explained in the European patent application EP 1662810 A1, in which wire contacts are disconnectable from each other at a disconnection point inside the module. In both contacts, an inclined tab forms a vertex. The vertices of the contacts elastically meet at the disconnection point. A plug can be inserted to separate the tabs from each other. Also in the United States patent application US 2007/0082524 A1, a module is shown, into which a disconnection plug can be inserted from a front side of the housing of the module, which separates or spaces two contacts from each other.

Generally, cross-connect modules do not provide this "look-both-ways" testing functionality. Once a telecommunications provider has installed cross-connect modules in its network, and later requires repeated look-both-ways testing at one of these modules, its installers can either replace the entire cross-connect module with a disconnection module, or disconnect an individual wire from a cross-connect module each time a test is required, test the line of that wire in both directions, and then reconnect the wire. While the former method is labour-intensive and costly, the latter method puts mechanical stress on the wire and increases the risk of electrical failures, e.g. bad electrical connections, and can result in a shortening of the wire.

It is therefore desirable to enable repeated "look-both-ways" testing on cross-connect telecommunications modules without increasing the risk of electrical failure.

The present invention provides an extension module for a telecommunications module having a first externally accessible wire contact for securing a telecommunications signal wire thereto, the extension module comprising
a) a contact engagement element, adapted to be mechanically engaged with, and electrically connected with, the wire contact of the telecommunications module,
b) a conductive wire connection element, adapted for conductively securing a telecommunications signal wire thereto, and electrically connected with the contact engagement element, characterized by further comprising engagement means for engaging the extension module with the telecommunications module in such a manner, that, when engaged, at least a portion of the extension module can be moved into a closed position, in which the contact engagement element is in contact with the wire contact, and into an open position, in which the contact engagement element is not in contact with the wire contact.

The extension module according to the invention can thus be engaged with a telecommunications module and facilitates disconnection or separation of a telecommunications line, e.g. for "look-both-ways" testing. In the closed position, there is an electrical connection between the wire contact of the telecommunications module, through the contact engagement element to the wire connection element of the extension module, and further into the telecommunications wire line connected to the wire connection element. The telecommunications line is not interrupted by the extension module, and thus operational to transmit telecommunication signals. In the open position, the telecommunications wire line is interrupted, because the contact engagement element of the extension module is not in contact, i.e. not connected, with the wire contact of the telecommunications module. In this position, test signals can be sent into the part of the line which is connected with the wire contact, and independently other test signals can be sent into the part of the line which is connected with the wire connection element of the extension module. Due to the presence of the engagement means, the extension module can be moved from the closed position into the open position and back many times without increasing the risk of a bad electrical contact. The extension module according to the invention thereby enables repeated "look-both-ways" testing on cross-connect telecommunications modules without increasing the risk of electrical failure.

An extension module according to the invention is particularly useful for engagement with a cross connect telecommunications module, because it may provide an upgrade to the cross connect telecommunications module by adding a disconnection functionality. However, an extension module according to the invention may also be useful for engagement with other telecommunications modules, for example with disconnection telecommunications modules, because it may provide, in addition to an internal disconnection point in the telecommunications module, a further disconnection point. This may help increase the flexibility when tests or measurements are required. The further disconnection point, provided by the extension module of the present invention, may be located outside the disconnection telecommunications module, and may thus be more easily accessible than an internally-arranged disconnection point. Also, if an internal disconnection mechanism in the disconnection telecommunications module is broken, the extension module may provide a replacement disconnection point, thereby making the de-installation, replacement and reinstallation of an entire telecommunications module unnecessary.

Generally, the engagement means may be suitable for engaging the extension module with the telecommunications module in such a manner, that, when engaged, the entire extension module can be moved into a closed position, in which the contact engagement element is in contact with the wire contact, and into an open position, in which the contact engagement element is not in contact with the wire contact. Alternatively, the engagement means may be suitable for engaging the extension module with the telecommunications module in such a manner, that, when engaged, a portion of the extension module can be moved into a closed position, in which the contact engagement element is in contact with the wire contact, and into an open position, in which the contact engagement element is not in contact with the wire contact.

Generally, the extension module may have a body comprising electrically nonconductive polymeric material. The engagement means may be formed integrally with the body. The body may form a housing of the extension module. The contact engagement element and/or the wire connection element may be supported by the housing. The contact engagement element and/or the wire connection element may be arranged inside the housing.

The engagement means may be suitable for movably engaging the extension module, or a portion of it, with the telecommunications module, in particular for pivotably engaging the extension module, or a portion of it, with the telecommunications module. The engagement means may also be suitable for removably engaging the extension module, or a portion of it, with the telecommunications module, which may be advantageous in that the extension module can be removed from the telecommunications module once it is no longer needed, so that it could be used on another telecommunications module. The engagement means may be engageable with a corresponding fixing means on the telecommunications module, or on a housing of the telecommunications module. In particular it may be engageable with a corresponding fixing means on an outer surface of a housing of the telecommunications module. The engagement means may, for example, comprise a hinge or a hinge pin. The hinge or the hinge pin, as the case may be, may be engageable with a corresponding recess in the telecommunications module. The engagement means may, alternatively, comprise a recess. The recess may be engageable with a corresponding hinge or hinge pin on the telecommunications module. The engagement means may comprise a clip or a latch. The clip or the latch may be engageable with a corresponding fixing means on the telecommunications module.

Generally, the extension module may be adapted to be engaged with a housing of the telecommunications module. Engagement by the extension module with a housing will often facilitate easier and quicker and more reliable engagement.

Generally, the extension module may be adapted such that, when engaged with the telecommunications module and in the closed position, the extension module and the telecommunications module form a cavity around the wire contact, in which cavity an electrically insulating grease or gel can be permanently contained. The extension module may, for example, form a lid covering a recess in the telecommunications module, in which recess the wire contact is arranged. The recess may then be limited by a portion of the extension module and a portion of the telecommunications module such that these portions form a cavity. The cavity may be closed or closed completely. Alternatively, the cavity may be open, i.e. not closed completely. Even an open cavity may be suitable for permanently containing grease or gel. An extension module of this type allows to embed the wire contact in electrically insulating grease or gel. Such grease or gel may protect the wire contact and, when the extension module is engaged and in the closed position, the contact engagement element against environmental effects. This may increase the reliability of the electrical contact between the wire contact and the contact engagement element.

The engagement means may be adapted for pivotable engagement of the extension module with the telecommunications module. In this case, after engagement, at least a portion of the extension module is pivotable with respect to the telecommunications module. The closed position of the extension module may be a first pivot position of the extension module or a portion of it. The open position of the extension module may be a second pivot position of the extension module or a portion of it. Pivotable engagement may allow for a space-saving arrangement of the extension module, or a part of it, relative to the telecommunications module. Also, pivotable engagement may allow for a precise definition of the open position and the closed position. Also, pivotable engagement limits the degrees of freedom of movement when manually engaging the extension module with the telecommunications module, so that the risk of damage by incorrect engagement may be reduced.

The contact engagement means is electrically conductive. It may be adapted to mechanically engage with a wire contact of the telecommunications module, e.g. with an insulation displacement contact ("IDC") or with an insulation piercing contact ("IPC"), in particular with a closed insulation piercing contact ("CIPC") or with an open insulation piercing contact ("OIPC"). The contact engagement means may comprise an engagement contact. A portion of the engagement contact may be adapted to be pushed between the opposed blades of an IDC, so that the resilient blades hold the engagement contact in place between them by friction and thereby engage the contact engagement element with the wire contact and electrically connect the contact engagement element with the wire contact. By the same mechanism, the extension module may be engaged with the telecommunications module.

The wire connection element of the extension module is electrically conductive. It is adapted to conductively secure, or connect, a telecommunications signal wire to it. In particular, it may be adapted to secure a conductor of a telecommunications signal wire to it. The wire connection element may comprise, for example, an insulation displacement contact ("IDC") or an insulation piercing contact ("IPC") or a soldering point.

The wire contact of the telecommunications module may be flat. It may lie in a first plane. The contact engagement element may be adapted to be mechanically engaged with, and electrically connected with, the flat wire contact. The wire connection element of the extension module may be flat. It may lie in a second plane in at least one position of the extension module or a portion of it. At least a portion of the extension module may be movable such that the wire connection element lies in a second plane. The first plane and the second plane may be parallel to each other. A flat wire connection element may allow for a quicker and more reliable connection of a wire with it. If the plane of the wire connection element and the plane of the wire contact are parallel after engagement of the extension module, at least in one position of the extension module, the direction in which a wire can be led towards and/or introduced into the wire connection element may be the same direction as the direction in which the wire can be led towards and/or introduced into the wire contact. This may make connection of wires easier, e.g. after the telecommunication module has been upgraded by engaging the extension module with the telecommunications module, because the wires do not have to be bent into a new direction.

The extension module according to the invention may comprise a conductive contact element. The contact element may have a first portion comprising the contact engagement element. It may have a second portion comprising the wire connection element. The contact element may be L-shaped, i.e. comprising two elongate portions connected at a right angle, having first and second end portions. The first end portion may comprise the contact engagement element. The second end portion may comprise the wire connection element. Generally, and independent of its shape, the contact element may be integrally formed, i.e. it may consist of one single piece. In particular, a contact element comprising the contact engagement element and the wire connection element may be integrally formed, i.e. it may consist of one single piece. Generally, providing a contact element is beneficial as it may make assembly of the extension module easier and more reliable. An L-shaped contact element may provide mechanical stability and may optimize material use in manufacturing. An integrally formed, or single-piece contact element may make certain assembly steps obsolete and avoids problems stemming from interactions of different sub-elements forming the contact element.

The extension module may be adapted such that the first wire contact is externally accessible, when the extension module is engaged with the telecommunications module and the extension module - or a portion of it - is in the open position. The extension module may, for example, have an opening or a recess or a passageway, e.g. in a housing, that allows one to insert a probe tip into the extension module such that the probe tip can contact the wire contact. Alternatively, or in addition, the extension module may be shaped such that the first wire contact is externally accessible after engagement of the extension module to the telecommunications module in the open position, and/or in the closed position. The wire contact may be externally accessible for manual work. This allows for a measurement tool to make mechanical and electrical contact with the wire contact after the extension module has been engaged with the telecommunications module. The measurement tool can then send test signals into the telecommunications line wire that is connected with the first wire contact.

It is also advantageous if the wire connection element is externally accessible both in the open and in the closed position, because this allows for connecting a wire in any one position, and thereby potentially provides greater flexibility when installing extension modules according to the invention. Therefore, the wire connection element may be externally accessible for securing a wire thereto, i.e. such as to enable securing of a wire thereto, both in the open and in the closed position of the extension module or a portion of it.

Many cross connect telecommunications modules have a plurality of wire contacts on one side, e.g. on the outgoing side, and these are often arranged in rows. Telecommunications signals are often transmitted by pairs of wires, so that two wires of a wire pair jointly transmit signals for one destination. Two wire contacts intended for one pair of wires are often arranged next to each other or opposite one another, when the wire contacts are arranged in two opposed rows.

An extension module according to the present invention may be adapted to work with two or more wire contacts. In such a case, the extension module may have two or more contact engagement elements and corresponding two or more wire connection elements electrically connected to them individually, such that in the closed position, the two or more contact engagement elements are in contact with two or more wire contacts of the telecommunications module, and such that in the open position, the two or more contact engagement elements are not in contact with the two or more wire contacts of the telecommunications module.

In other words, an extension module according to the present invention, for a telecommunications module having a first and a second externally accessible wire contact, may comprise a second contact engagement element and a second wire connection element. The second wire connection element may be electrically connected with the second contact engagement element.

In such an extension module, the second contact engagement element may be adapted to be mechanically engaged with, and electrically connected with, the second wire contact. The second wire connection element may be adapted for conductively securing a second telecommunications signal wire thereto. The engagement means may be adapted for engaging the extension module with the telecommunications module in such a manner, that, when engaged, at least a portion of the extension module can be moved into a closed position, in which the first and the second contact engagement elements are in contact with the first and the second wire contact respectively, and it can be moved into an open position, in which the first and the second contact engagement elements are not in contact with the first and second wire contacts, respectively. In one embodiment, the first and the second telecommunications wires form a wire pair jointly transmitting a single telecommunications signal.

Thus, in one embodiment, an extension module according to the invention, for a telecommunications module having a first and a second externally accessible wire contact, further comprises
a second contact engagement element, adapted to be mechanically engaged with, and electrically connected with, the second wire contact, and
a second wire connection element, adapted for conductively securing a second telecommunications signal wire thereto, the second wire connection element being electrically connected with the second contact engagement element.

In one embodiment, for a telecommunications module having a first and a second externally accessible wire contact, the extension module may comprise a first and a second contact engagement element, adapted to be mechanically engaged with, and electrically connected with, the first and the second wire contact respectively. This extension module may further comprise a first and a second wire connection element, which wire connection elements are adapted for conductively securing a respective first and a second telecommunications signal wire thereto, and which are electrically connected with the first and the second contact engagement element, respectively. In other words, the first wire connection element is electrically connected with the first contact engagement element, and the second wire connection element is electrically connected with the second contact engagement element. This extension module also comprises engagement means for engaging the extension module with the telecommunications module in such a manner, that, when engaged, at least a portion of the extension module can be moved into a closed position, in which the first and the second contact engagement elements are in contact with the first and the second wire contacts, respectively, and into an open position, in which the first and the second contact engagement elements are not in contact with the first and the second wire contact, respectively.

An extension module for separating or disconnecting two or more telecommunication lines on a telecommunications module may avoid the need for individual disconnection or separation of two separate lines in two separate steps. When detecting faults on one telecommunication line, both wires of a wire pair that are jointly transmitting a single signal can thus be disconnected, so that "look-both-ways" fault detection can be performed. An extension module adapted to disconnect two wires, e.g. two wires of a wire pair, when moved into the open position, will make testing quicker, more reliable and hence more cost-effective.

The invention also provides a telecommunications module having a first externally accessible wire contact for securing a telecommunications signal wire thereto, and an engagement element for engaging with the engagement means of an extension module as described above.

The invention also provides, in one aspect, an assembly comprising a telecommunications module having a first externally accessible wire contact for securing a telecommunications signal wire thereto, and an extension module as described above, engageable and/or engaged with the telecommunications module.

In a further aspect, the present invention also provides a method of separating a telecommunications line, comprising the steps, sequentially performed in this order, of
a) providing a telecommunications module having a first wire contact with a first telecommunications line wire electrically connected to the first wire contact, providing an extension module as described above, a second telecommunications line wire being electrically connected with the wire connection element, the extension module being engaged with the telecommunications module and being in the closed position such that the first line wire is electrically connected with the second line wire; and
b) moving the extension module into the open position.

In a yet further aspect, the invention provides a method of upgrading a telecommunications module having a wire contact, such that the upgraded telecommunications module provides a line disconnection, comprising the steps, sequentially performed in this order, of
a) removing a telecommunications line wire, previously connected with the wire contact, from the wire contact;
b) engaging an extension module as described above with the telecommunications module such that the wire contact is electrically connected with the wire connection element, when the extension module, or a part of it, is in the closed position;
c) connecting the telecommunications line wire to the wire connection element of the extension module.

This method provides a way to upgrade a telecommunications module that had no disconnection functionality before the upgrade with a disconnection functionality, so that "look-both-ways" testing can be performed repeatedly without increasing the risk of electrical failures. The method can also be used for telecommunications modules that did have a disconnection before, which became non-operational before the upgrade. After the upgrade, the disconnection functionality is provided by the extension module.

The invention will now be described in more detail with reference to the following Figures exemplifying particular embodiments of the invention:
- Fig. 1: Perspective sectional view of an extension module according to the invention, and of a telecommunications module, engaged with each other;
- Fig. 2: Perspective view of the contact element of the extension module shown in Figure 1, and a wire contact of the telecommunications module; and
- Fig. 3: Perspective view of a further extension module according to the invention, comprising two contact elements, and of two wire contacts of a telecommunications module.

Herein below various embodiments of the present invention are described and shown in the drawings wherein like elements are provided with the same reference numbers.

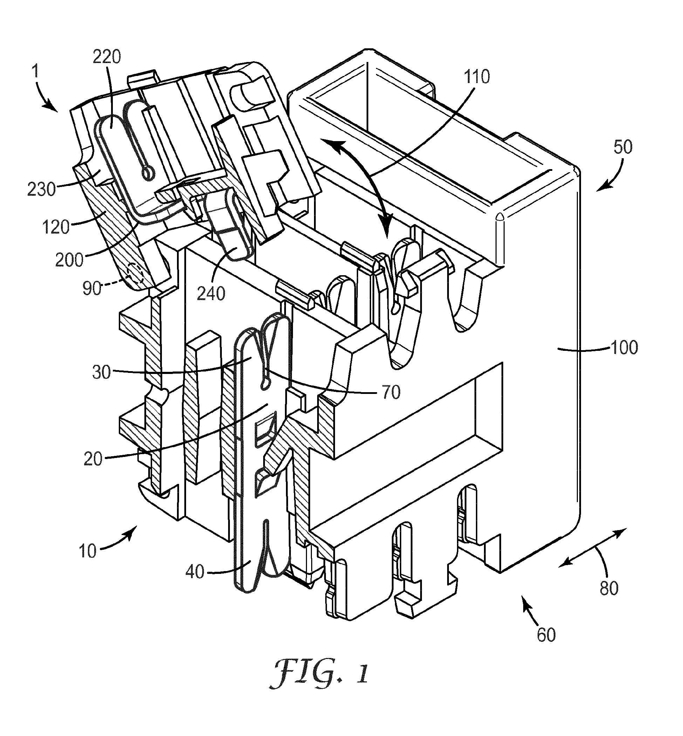

**Figure 1** is a sketch, in perspective sectional view, of an extension module 1 according to the invention, engaged with a cross-connect telecommunications module 10.

The telecommunications module 10 comprises a housing 100 containing a plurality of connection contacts 20, of which only one is shown for greater clarity. The other connection contacts 20 are identical to the one shown, and will thus not be described separately. They are arranged next to each other in one row which extends in lateral direction of the telecommunications module 10, indicated by arrow 80. The connection contact 20 is elongate and extends from a front side 50, e.g. the incoming side, of the telecommunications module to a rear side 60, e.g. the outgoing side. The connection contact 20 has a first wire contact 30 at its upper end portion, and a second wire contact 40 at its lower end portion. Both wire contacts 30, 40 are accessible from outside the telecommunications module 10, i.e. externally accessible, allowing manual work to be done on them, like securing wires to them. These wire contacts 30, 40 are flat IDC contacts, to which telecommunication signal wires can be conductively secured by forcing the wires into a wire slot 70 between opposed resilient cutting blades of the IDC contact 30, 40. For example, a signal wire carrying signals for a telecommunications customer may be secured to the second wire contact 40, and a further signal wire, e.g. a so-called jumper wire, may be secured to the first wire contact 30, before the extension module 1 is engaged with the telecommunications module 10. The connection contact 20 is made from thin sheet metal and electrically conductive.

The extension module 1 is pivotably engaged with the telecommunications module 10, specifically with the housing 100 of it. It comprises a housing 120 and engagement means, namely a pivot pin 90 defining a pivot axis of the extension module 1. The pivot pin 90 is engaged with a corresponding recess (not visible in Figure 1) in the housing 100 of the telecommunications module 10. The extension module 1 can thus be pivoted about the pivot pin 90, as indicated by arrow 110.

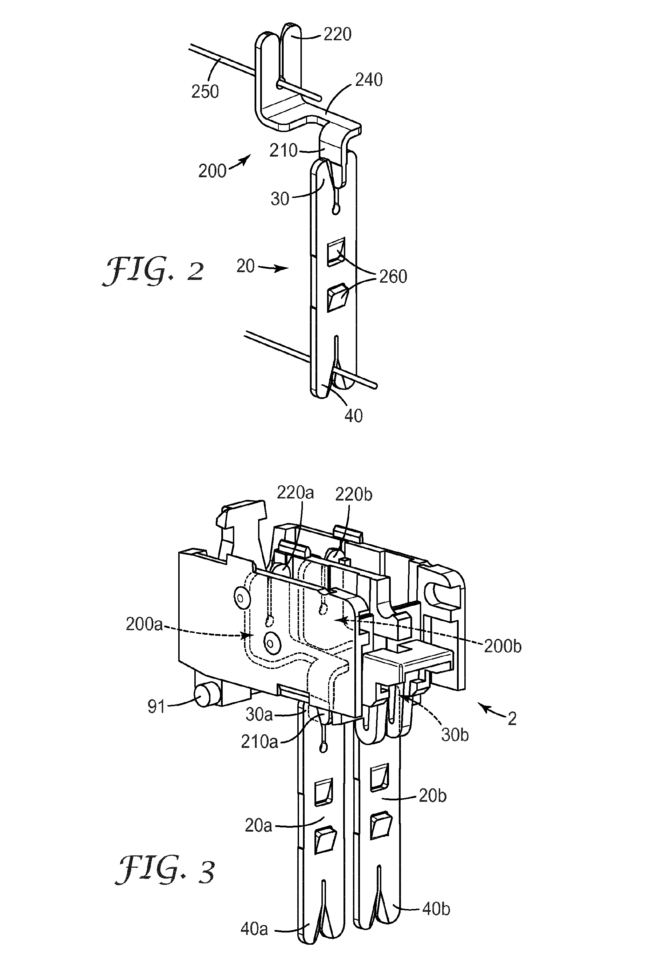

The extension module 1 comprises a conductive contact element 200, which is generally L-shaped and has two end portions. The contact element is shown in Figure 2 in greater detail. It is arranged inside the extension module housing 120 and supported by the housing 120. The contact element 200 comprises, on a first end portion, a contact engagement element 210, and, on a second end portion, a wire connection element 220. The contact engagement element 210, in this embodiment, is a jumper blade 210 that can be pushed into the wire slot 70 between the cutting blades of the first wire contact 30, so that the jumper blade 210 is mechanically engaged with the first wire contact 30 by the resilience forces of the cutting blades. When mechanically engaged, the jumper blade 210 is also electrically connected with the wire contact 30. The jumper blade 210 has a suitable thickness, so that a certain moderate force is required to engage it, i.e. push it into the wire slot 70, and so that it can be disengaged, i.e. pulled out of the wire slot 70, with a moderate manual force. To facilitate the engagement and the disengagement, the jumper blade 210 is oriented suitably such that its plane is oriented perpendicularly to the plane of the first wire contact 30.

The wire connection element 220, on the second end portion of the contact element 200, is an IDC contact 220, in the embodiment shown in Figure 1. The wire connection element 220 is electrically connected with the contact engagement element 210 by virtue of the entire contact element 200 consisting of a single piece of conductive metal. The wire connection element 220 is arranged in a recess 230 of the housing 120 of the extension module 1, and thereby externally accessible, e.g. for manual connection of a wire. A telecommunications signal wire can be conductively secured to the wire connection element 220 by pushing it into the wire slot of the IDC contact.

In Figure 1, the extension module 1 is shown in a pivot position which may be called an open position of the extension module 1, relative to the telecommunications module 10 with which it is engaged. In this open position, the contact engagement element 210, (here the jumper blade 210), is not in contact with the first wire contact 30 of the telecommunications module 10. A first telecommunications line, connected to the second wire contact 40 of the connection contact 20, is thus electrically separated from a second telecommunications line, connected to the wire connection element 220. These telecommunication lines (not shown) can thus be tested separately in a "look-both-ways" method. In the open position of the extension module 1, the first wire contact 30 is externally accessible for performing testing on the first telecommunications line, and the wire connection element 220 is externally accessible for performing testing on the second telecommunications line. By pivoting the extension module 1 about the pivot axis 90, the extension module 1 can be moved, relative to the telecommunications module 10, into a closed position (not shown in Figure 1) in which the contact engagement element 210, i.e. the jumper blade 210, is in electrical contact with the first wire contact 30. This pivot position may be called a closed position. In this closed position, a first telecommunications line, connected to the second wire contact 40 of the connection contact 20, is thus electrically connected to a second telecommunications line, connected to the wire connection element 220. These telecommunication lines can thus transmit telecommunications signals between them.

The contact element 200 of the extension module 1 of Figure 1 is shown in greater detail in **Figure 2****,** in a perspective view. It comprises, at the upper end portion of it, the wire connection element 220, and at the lower end portion, the contact engagement element 210, namely the jumper blade 210, as well as a middle portion 240 connecting the end portions 210, 220 with one another. The contact element 200 consists of a single piece of conductive metal. It is generally L-shaped, with the contact engagement element 210 protruding from one arm of the L-shape.

Figure 2 shows the contact element 200 engaged with the connection contact 20 of Figure 1. Figure 2 thus shows the position of the contact element 200 relative to the connection contact 20 when the extension module 1 is in the closed position, pivoted downward in Figure 1. In this position, the jumper blade 210 is engaged between the resilient cutting blades of the first wire contact 30, so that the jumper blade 210 is in electrical contact with the first wire contact 30, and the wire connection element 220 is in electrical contact with the second wire contact 40. The connection contact 20 has resilient protrusions 260 for fixing the connection contact 20 in the housing of the telecommunication module.

Both the wire connection element 220 and the first wire contact 30 are generally flat. The shape of the contact element 200 is designed such that the plane in which the wire connection element 220 lies, is parallel to the plane in which the first wire contact 30 lies. In many situations, this allows to easily re-connect a signal wire 250, that had previously been secured to the first wire contact 30 and that had been removed, to the wire connection element 220, because the end of the wire 250 can generally keep its orientation.

A second extension module 2 according to the invention is shown in **Figure 3****,** in a sketched perspective view. This extension module 2 is similar to the first extension module 1 described above, except that it comprises two contact elements 200a, 200b instead of one. The extension module 2 comprises engagement means, namely a pivot pin 91, for engaging the extension module 2 with the telecommunications module, so that the extension module 2 can be pivoted into an open position (not shown in Figure 3) and a closed position (shown in Figure 3). The two contact elements 200a, 200b are identical to the contact element 200 described in the context of Figures 1 and 2, and they are arranged parallel to each other and in the same orientation. Of the contact elements 200a, 200b, only the wire connection elements 220a, 220b and a front portion of the contact engagement element 210a of the first contact element 200a are visible in Figure 3, while the second contact engagement element 210b remains invisible in the Figure. To each of the wire connection elements 220a, 220b, a respective signal wire can be secured.

Figure 3 also shows two connection contacts 20a, 20b of a telecommunications module (not shown), comprising respective first wire contacts 30a, 30b and second wire contacts 40a, 40b. These connection contacts 20a, 20b are identical to the connection contact 20 shown in Figures 1 and 2. The extension module 2 is shown in its closed position, i.e. pivoted downwards in the Figure, such that the first contact engagement element 210a is mechanically engaged with, and electrically connected to, the first wire contact 30a of the first connection contact 20a, and the second contact engagement element 210b (not visible) is mechanically engaged with, and electrically connected to, the first wire contact 30b (not visible) of the second connection contact 20b. The first contact element 200a is not electrically connected with the second contact element 200b. Both the first wire connection element 220a and the second wire connection element 220b are externally accessible, independent of the pivot position of the extension module 2.

## Claims

1. Extension module (1, 2) for a telecommunications module (10) having a first externally accessible wire contact (30, 30a) for securing a telecommunications signal wire thereto,
the extension module comprising
a) a contact engagement element (210, 210a), adapted to be mechanically engaged with, and electrically connected with, the wire contact of the telecommunications module,
b) a conductive wire connection element (220, 220a, 220b),
adapted for conductively securing a telecommunications signal wire (250) thereto, and electrically connected with the contact engagement element,
**characterized by**
further comprising engagement means (90, 91) for engaging the extension module with the telecommunications module in such a manner, that,
when engaged, at least a portion of the extension module can be moved into a closed position, in which the contact engagement element is in contact with the wire contact, and
into an open position, in which the contact engagement element is not in contact with the wire contact.

2. Extension module (1, 2) according to claim 1, adapted to be engaged with a housing (100) of the telecommunications module.

3. Extension module (1, 2) according to claim 1 or claim 2, adapted such that, when engaged with the telecommunications module and in the closed position, the extension module and the telecommunications module form a cavity around the wire contact, in which cavity an electrically insulating grease or gel can be permanently contained.

4. Extension module (1, 2) according to any one of the preceding claims,
wherein the engagement means is adapted for pivotable engagement of the extension module with the telecommunications module, such that the closed position is a first pivot position, and the open position is a second pivot position of the extension module or a portion of it.

5. Extension module (1, 2) according to any one of the preceding claims, wherein the wire contact is flat and lies in a first plane,
wherein the wire connection element is flat,
wherein the at least a portion of the extension module is movable such that the wire connection element lies in a second plane,
and wherein the first plane and the second plane are parallel to each other.

6. Extension module (1, 2) according to any one of the preceding claims, comprising a contact element which has a first portion comprising the contact engagement element, and a second portion comprising the wire connection element.

7. Extension module (1, 2) according to claim 6, wherein the contact element consists of a single piece.

8. Extension module (1, 2) according to claim 6 or claim 7, wherein the contact element is L-shaped and has first and second end portions, and wherein the first end portion comprises the contact engagement element and the second end portion comprises the wire connection element.

9. Extension module (1, 2) according to any one of the preceding claims, adapted such that the wire contact is externally accessible, when
- the extension module is engaged with the telecommunications module; and
- the extension module or at least a portion of it is in the open position.

10. Extension module (1, 2) according to any one of the preceding claims,
wherein the wire connection element is externally accessible for securing a wire thereto, both in the open and in the closed position of the extension module or a portion of it.

11. Extension module (2) according to any one of the preceding claims, for a telecommunications module having a first and a second externally accessible wire contact (30a, 30b),
the extension module further comprising
a second contact engagement element, adapted to be mechanically engaged with, and electrically connected with, the second wire contact (30b), and a second wire connection element (220b), adapted for conductively securing a second telecommunications signal wire thereto, the second wire connection element being electrically connected with the second contact engagement element.

12. Telecommunications module (10) having a first externally accessible wire contact and an engagement element for engaging with the engagement means (90, 91) of an extension module according to any one of claims 1 to 11.

13. Assembly comprising a telecommunications module and an extension module (1, 2) according to any one of claims 1 to 11, engageable and/or engaged with the telecommunications module.

14. Method of separating a telecommunications line, comprising the steps, sequentially performed in this order, of
a) providing a telecommunications module (10) having a first wire contact (30, 30a) with a first telecommunications line wire electrically connected to the first wire contact, providing an extension module (1, 2) according to any one of claims 1 to 11, a second telecommunications line wire being electrically connected with the wire connection element (220, 220a, 220b), the extension module being engaged with the telecommunications module and being in the closed position such that the first line wire is electrically connected with the second line wire; and
b) moving the extension module into the open position.

15. Method of upgrading a telecommunications module (10) having a wire contact (30, 30a, 30b), such that the upgraded telecommunications module provides a line disconnection, comprising the steps, sequentially performed in this order, of
a) removing a telecommunications line wire, previously connected with the wire contact, from the wire contact;
b) engaging an extension module (1, 2) according to any one of claims 1 to 11 with the telecommunications module such that the wire contact is electrically connected with the wire connection element (220, 220a, 220b), when the extension module is in the closed position; and
c) connecting the line wire to the wire connection element of the extension module.
